(19) Europäisches Patentamt
European Patent Office
Office européen des brevets

(11) **EP 4 027 474 A1**

(12) **EUROPEAN PATENT APPLICATION**

(43) Date of publication:
**13.07.2022 Bulletin 2022/28**

(21) Application number: **22150935.9**

(22) Date of filing: **11.01.2022**

(51) International Patent Classification (IPC):
**H02J 3/00** (2006.01)    **H02J 15/00** (2006.01)

(52) Cooperative Patent Classification (CPC):
**H02J 3/008; H02J 15/008;** H02J 2300/20

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.01.2021 JP 2021003044**

(71) Applicant: **Toshiba Energy Systems & Solutions Corporation**
**Kawasaki-shi, Kanagawa 212-0013 (JP)**

(72) Inventors:
• **Tamaru, Shingo**
  **Kawasaki-shi, Kanagawa 212-0013 (JP)**
• **Akiba, Takashi**
  **Kawasaki-shi, Kanagawa 212-0013 (JP)**
• **Yamane, Fumiyuki**
  **Kawasaki-shi, Kanagawa 212-0013 (JP)**
• **Kurita, Hirofumi**
  **Kawasaki-shi, Kanagawa 212-0013 (JP)**

(74) Representative: **Hoffmann Eitle**
**Patent- und Rechtsanwälte PartmbB**
**Arabellastraße 30**
**81925 München (DE)**

(54) **POWER CONTROL DEVICE AND POWER CONTROL METHOD**

(57)    A power control device for a hydrogen system according to the present embodiment is a power control device configured to control a supply of generated power generated by a renewable energy generation device, and includes an acquirer and a controller. The acquirer acquires information related to an amount of power sale in a predetermined period. The controller controls the power supplier of the renewable energy generation device to sell power from the generated power, such that the integrated value of the power sale in time series in a predetermined period becomes the power sale amount. The controller makes an average value of the power sale in a first period within the predetermined period larger than the average value of a second period within the predetermined period after the first period.

FIG. 3

**Description**

<u>FIELD</u>

The embodiments of the present invention relate to a power control device and a power control method.

<u>BACKGROUND</u>

A hydrogen generation system that produces hydrogen by using a power supplied from a power system and a power of a renewable energy generation device in which the fluctuation of the generated power is larger than that of the electric power system is generally known. In such a hydrogen system, an amount of hydrogen which satisfies a hydrogen demand is produced while adjusting a supply-demand balance of the power supplied from the power system.
On the other hand, in adjusting the supply-demand balance, the energy management system predicts the generated power of renewable energy based on information such as weather, and declares in advance a power sale (or purchase) in a certain time period. Then, in a declared time period, it is necessary to control each device to match a declared plan with an actual amount of power sale [kWh] (or amount of power purchase [kWh]). Generally, the balance of supply and demand is adjusted every 30 minutes, and the amount of power [kWh] per 30 minutes(= integrated value of instantaneous power) may be matched. However, the control response of the hydrogen production device is generally slower than the fluctuation of the renewable energy generation device.
In addition, until now, power plants (thermal power plants, etc.) have generally adjusted the supply-demand balance. However, in recent years, the spread of renewable energy has been increasing, and it is desirable to adjust the supply-demand balance by using renewable energy in the future.

<u>BRIEF DESCRIPTION OF THE DRAWINGS</u>

FIG.1 is a block diagram illustrating a configuration of a hydrogen generation system.
FIG. 2 is a block diagram illustrating a configuration of a hydrogen production plant.
FIG. 3 is a block diagram illustrating a configuration of a power control device.
FIG. 4 is a table illustrating an information example of a command signal including information on a planned value of power sale.
FIG. 5 is a diagram illustrating a control example when a real-time target value is set as the planned value of an average amount of power sale.
FIG. 6 is a diagram illustrating a control example in which the real-time target value is subtracted from a generated power.
FIG. 7 is a diagram illustrating a control example in which the real-time target value is generated according to an equation (4).
FIG. 8 is a diagram illustrating a control example in which the real-time target value is generated according to an equation (5).
FIG. 9 is a flowchart illustrating a control example of the power control device.
FIG. 10 is a block diagram illustrating a configuration example of the power control device according to a second embodiment.
FIG. 11 is a diagram illustrating a relationship between a predicted generated power and the real-time target value.
FIG. 12 is a diagram illustrating an example in which the value of the real-time target value is changed based on the predicted generated power.
FIG. 13 is a flowchart illustrating a control example of the power control device according to the second embodiment.

<u>DETAILED DESCRIPTION</u>

Hereinafter, the power control device and the power control method according to the embodiment of the present invention will be described in detail with reference to the accompanying drawings. The embodiments described below are only examples of the embodiments of the present invention and the present invention is not limited to the embodiments. In the drawings referred to in the embodiments, same parts or parts having identical functions are denoted by like or similar reference characters and there is a case where redundant explanations thereof are omitted. Further, for convenience of explanation, there are cases where dimensional ratios of the parts in the drawings are different from those of actual products and some part of configurations is omitted from the drawings.
A power control device for a hydrogen system according to the present embodiment is a power control device configured to control a supply of generated power generated by a renewable energy generation device, and includes an acquirer and a controller. The acquirer acquires information related to an amount of power sale in a predetermined period. The controller controls the power supplier of the renewable energy generation device to sell power from the generated power, such that the integrated value of the power sale in time series in a predetermined period becomes the power sale amount. The controller makes an average value of the power sale in a first period within the predetermined period larger than the average value of a second period within the predetermined period after the first period. According to this embodiment, it is possible to suppress the deviation between a planned value and an actual value of the amount of power sale.

(First embodiment)

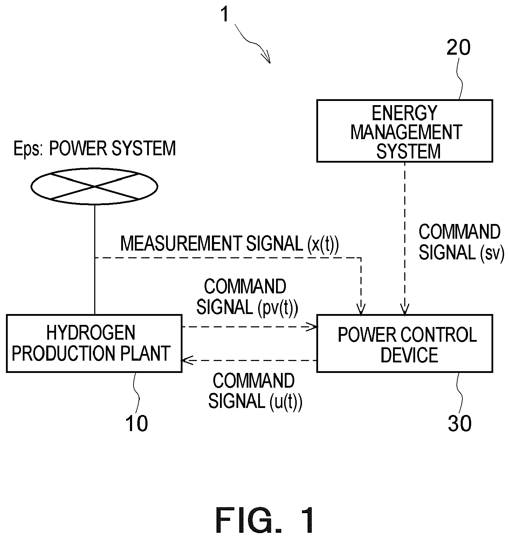

FIG. 1 is a block diagram illustrating a configuration of a hydrogen generation system 1 according to a first embodiment. As shown in FIG. 1, the hydrogen generation system 1 according to the present embodiment is a system for generating hydrogen, and is configured to include a hydrogen production plant 10, an energy management system 20, and a power control device 30. In FIG. 1, the power system Eps is further illustrated.

In the present embodiment, changing the power consumption pattern of the hydrogen production plant 10 according to the power supply status is referred to as demand response (hereinafter, may be simply referred to as DR). There are two types of demand response: so-called "fall DR" as "demand reduction" and so-called "raise DR" as "demand increase". In the so-called "fall DR", at least one of suppressing the power consumption of the hydrogen production plant 10 and increasing the power production is performed. When the amount of electric power production increases, the electric power generated by the hydrogen production plant 10 may be sold.

In the so-called "upward DR", at least one of increasing the power consumption of the hydrogen production plant 10 and suppressing the power production is performed. This makes it possible to effectively cut the peak of the power system Eps in the "downward DR". In the "upward DR", it is possible to stabilize the quality of electricity such as voltage and frequency by encouraging consumers to increase the consumption of electric power when the electric power supply becomes excessive.

The hydrogen production plant 10 may sell the surplus power from the generated power pv (t) generated by the renewable energy generation device in the hydrogen production plant 10 as the instantaneous power sale x (t). In other words, the instantaneous power sale x (t) is reverse-powered to the power system Eps to sell the power. Here, t indicates time. Note that, in this embodiment, the instantaneous power sale x (t) according to the present embodiment corresponds to the power sale.

Further, the hydrogen production plant 10 produces hydrogen from the generated power pv (t) generated by the renewable energy generation device and the power supplied from the power system Eps. The hydrogen production plant 10 outputs a measurement signal including information about the generated power pv (t) and the instantaneous power sale x (t) to the power control device 30.

The energy management system 20 outputs a command signal including information about a planned value of power sale sv within a predetermined period to the power control device 30. Further, the predetermined time interval in which the planned value of power sale sv is set corresponds to the demand response period. In the demand response period, the planned value of power sale sv may be set by an agreement with an electric power company.

Therefore, if the amount of power sale does not reach the planned value of power sale sv during the demand response period a penalty may be imposed depending on the contract for the amount of power sale which does not reach the planned value of power sale sv. The demand response period may be in units of 30 minutes, and the period may be 30 to 120 minutes. As such, the energy management system 20 is a system for creating an operation plan for the hydrogen production plant 10. The operation plan is generally a 48-division operation plan in which a day is divided into 30-minute units.

The power control device 30 is a control device that controls the hydrogen production plant 10 based on the operation plan created by the energy management system 20. More specifically, the power control device 30, based on a measurement signal including information about the generated power pv (t) and the instantaneous power sale x (t) supplied from the hydrogen production plant 10 and a command signal including information on the planned value of power sale sv, outputs a command signal including information about a input power instruction value u (t) and an output power of a power conditioner p (t) to the hydrogen production plant 10. The power system Eps may be a transmission and distribution network managed by a power company.

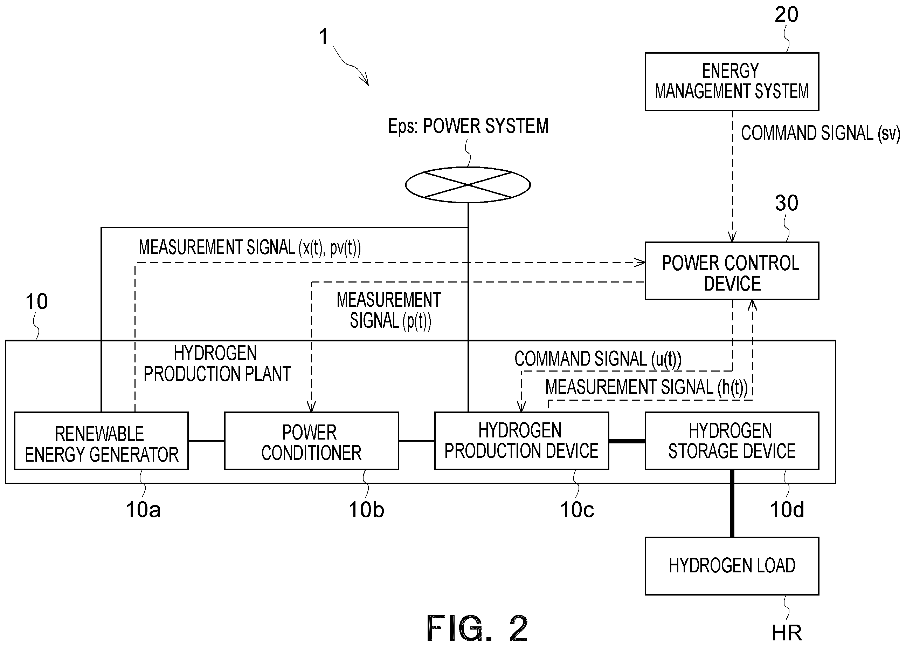

FIG. 2 is a block diagram illustrating the configuration of the hydrogen production plant 10. As shown in FIG. 2, the hydrogen production plant 10 includes a renewable energy generation device 10a, a power conditioner 10b, a hydrogen production device 10c, and a hydrogen storage device 10d. In FIG. 2, a hydrogen load HR is further illustrated. Note that, in the present embodiment, an AC power value is described as a reference value, but the present invention is not limited to this, and a DC power value may be used as the reference value. For example, the generated power pv (t) according to the present embodiment is in AC power value, but the generation power pv (t) may be indicated by a DC power value.

The renewable energy generation device 10a has a generation facility derived from natural energy. The generation facility derived from this renewable energy may be a photovoltaic power generation device (PV) using sunlight, and generates the generated power pv (t). For example, the renewable energy generation device 10a according to the present embodiment, branches the generated power pv (t) to a power sale side and the hydrogen production device 10c, and the power supplier of the renewable energy generation device 10a converts DC to AC. As described above, the renewable energy generation device 10a outputs a measurement signal including information about generated power pv (t), which is AC power values of generated power, and instantaneous power sale x (t) to the power control device 30. Note that, in the present embodiment, the power generated by the renewable energy generation device 10a may be referred to as PV generated power.

The renewable energy generation device 10a does not require fuel such as fossil fuel, but its generation amount is unstable because it is affected by environment such as weather. The renewable energy generation device 10a may be a wind power generation facility or a generation facility using new energy such as biomass or biomass-derived waste. The hydrogen production plant 10 according to the present embodiment includes, but is not limited to, a renewable energy generation device in the hydrogen production plant 10. For example, the hydrogen production plant 10 may be configured without the renewable energy generation device 10a. In this case, the power control device 30 may respectively control the hydrogen production plant 10 and the renewable energy generation device 10a.

The power conditioner 10b may be configured to include a converter. This converter converts the generated power pv (t) output by the renewable energy generation device 10a into a predetermined output power p (t). More specifically, the power conditioner 10b supplies the output power p (t) which is adjusted in magnitude from the generated power pv (t) to the hydrogen production device 10c, according to the command signal including the information about the output power p (t) input from the power control device 30. In other words, the magnitude of the output power p (t) output by the power conditioner 10b is adjusted to be equal or less than the generated power pv (t). Note that, in the present embodiment, the DC power is branched from the power sale side and the hydrogen production device 10c, and the power supplier included in the renewable energy generation device 10a is configured to perform DC-AC conversion, but the present invention is not limited to this. For example, the power conditioner 10b may be configured to be included in the renewable energy generation device 10a. In this case, the power supply from the power conditioner 10b may be configured and controlled so as to be branched and supplied to the power sale side and the hydrogen production device 10c side. In such configuration, the power conditioner 10b included in the renewable energy generation device 10a corresponds to the power supplier.

The hydrogen production device 10c produces hydrogen from electricity and water by electrolysis of water. The hydrogen production device 10c may be an electrowater decomposition device that produces hydrogen and oxygen by passing an electric current through an alkaline solution. Further, the hydrogen production device 10c stores the generated amount of hydrogen H (t) in the hydrogen storage device 10d via a hydrogen pipe. Further, the hydrogen production device 10c outputs a measurement signal including information about the amount of hydrogen production h (t) to the power control device 30.

The hydrogen production device 10c produces the amount of hydrogen H (t) corresponding to the input power instruction value u (t) according to a command signal including information about the input power instruction value u (t) input from the power control device 30. Since power is generally not supplied from the power system Eps when the surplus power of the generated power pv (t) is sold, the value of the output power p (t) output from the power conditioner 10b and the input power instruction value u (t) are equivalent. Therefore, in the following, the input power instruction value u (t) will be described as a control example at the time of power sale. Note that, in the present embodiment, the input power instruction value u (t) will be described as a control example at the time of power sale, but the present invention is not limited to this. For example, the output power p (t) may be controlled in the same manner as the input power instruction value u (t).

The hydrogen storage device 10d stores hydrogen produced by the hydrogen production device 10c. The hydrogen storage device 10d is connected to the hydrogen production device 10c and the hydrogen load HR via a pipe. Further, the hydrogen storage device 10d supplies hydrogen to the hydrogen load HR via the pipe. Note that the renewable energy generation device 10a and the power conditioner 10b may be arranged outside the hydrogen production plant 10. In other words, the hydrogen production plant 10 may be configured to not include the renewable energy generation device 10a and the power conditioner 10b.

The hydrogen load HR may be a fuel cell generator, a fuel cell vehicle, or the like. Alternatively, the hydrogen load HR may be a trailer for delivering hydrogen to each consumer.

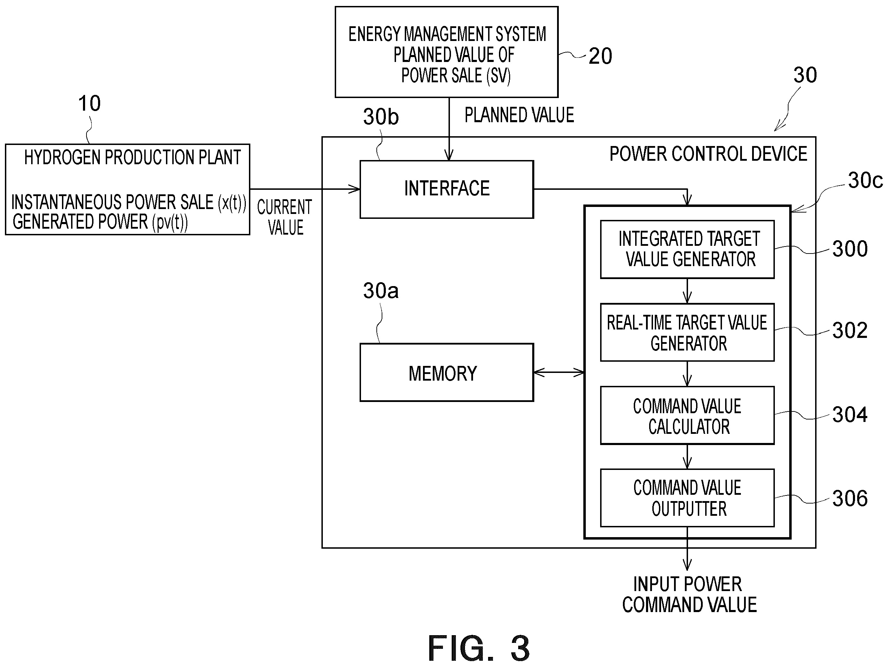

FIG. 3 is a block diagram illustrating the configuration of the power control device 30. As shown in FIG. 3, the power control device 30 includes a memory 30a, an interface 30b, and a controller 30c.

The memory 30a may be realized by a RAM (Random Access Memory), a semiconductor memory element such as a flash memory, a hard disk, or the like. The memory 30a stores programs executed by the controller 30c, various control data, and control parameters. The setting parameters used by the real-time target value generator 302, which will be described later, may be stored.

The interface 30b communicates with the renewable energy generation device 10a (FIG. 2), the hydrogen production plant 10 (FIG. 2), and the energy management system 20 (FIG. 2). As a result, the interface 30b acquires the instantaneous power sale x (t), the generated power pv (t), the planned value of power sale sv, and the like. Note that the interface 30b according to the present embodiment corresponds to the acquirer.

Further, the interface 30b may receive command signal including information such as a prediction value of PV generated power amount Prep, plant power consumption (= minimum), and PV generated amount confidence interval for each time section of control from the energy management system 20 (FIG. 2). The PV generated amount confidence interval is information indicating the probability distribution of the predicted generated power Prep. The probability distribution may be indicated by a normal distribution with a standard deviation $\sigma$. It is shown that a prediction accuracy of the prediction value of PV generated power amount Prep decreases as the standard deviation $\sigma$ increases.

The controller 30c may be configured to include a CPU (Central Processing Unit), and executes control based on a program stored in the memory 30a. The controller 30c includes an integrated target value generator 300, a real-time target value generator 302, a command value calculator 304, and a command value outputter 306. Note that the integrated target value generator 300, the real-time target value generator 302, the command value calculator 304, and the value outputter 306 may each be configured by a circuit. Further, in the present embodiment, the start time in the time section of control such as the demand response period is referred to as a frame start time, and the end time is referred to as a frame end time. Further, the unit time of the demand response period is referred to as a frame. The real-time target value generator 302 according to the present embodiment corresponds to the target value generator, and the real-time target value sv (t) which will be described later corresponds to the target value.

The integrated target value generator 300 generates the integrated target value sv_I of the current frame by using the planned value of power sale sv acquired from the energy management system 20. In the demand response, the controller 30c controls the hydrogen production plant 30 such that the integrated target value sv_I matches the integrated value of the instantaneous power sale x (t). The integrated target value sv_I according to the present embodiment corresponds to the amount of power sale within a predetermined period.

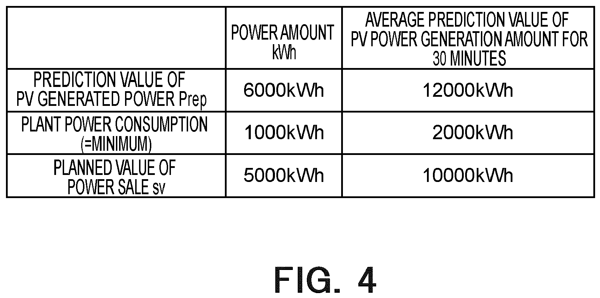

FIG. 4 is a table illustrating an information example of a command signal including information about the planned value of power sale sv acquired from the energy management system 20. The prediction value of PV generated power amount Prep is a predicted value of the generation amount of the renewable energy generation device 10a for one frame, which is, for 30 minutes. In FIG. 4, the prediction value of PV generated power amount is 6000 kwh, and the average prediction value of PV generated power amount for 30 minutes is 12000 kw. The plant power consumption (= minimum) is 1000 kwh, and the average plant power consumption (= minimum) for 30 minutes is 2000 kw. This plant power consumption (= minimum) may indicate the power of the hydrogen production plant 10 when hydrogen is not produced. Further, the planned value of power sale sv is 5000 kwh, and the average planned value of power sale for 30 minutes is 10000 kw.

The integrated target value generator 300 may generate an integrated target value sv_I of the current frame according to an equation (1), based on the planned value of power sale sv. Since this integrated target value sv_I is an invariant value in the frame, it is calculated at the start of the frame.

$$\text{sv\_I} = \text{sv} \times 3600 \qquad\qquad (1)$$

The real-time target value generator 302 uses the setting parameters stored in the memory 30a and the integrated target value sv_I generated by the integrated target value generator 300, to generate a real-time target value sv (t) of instantaneous power sale x(t) which is a control target in a control cycle such as a second or minute. A detailed control example of the real-time target value generator 302 will be described later.

The command value calculator 304 calculates the input power instruction value u (t) of the hydrogen production device 10c using the real-time target value sv (t) generated by the real-time target value generator 302 as the control target in each control cycle. Then, the command value outputter 306 outputs the input power instruction value u (t) to the hydrogen production device 10c.

More specifically, the command value calculator 304 controls the input power with PID control such that the real-time target value sv (t) and the instantaneous power sale x (t) match according to an equation (2) and an equation (3). KP, KI, and KD respectively are control parameters of the PID controller.

$$e(t) = x(t) - sv(t) \qquad\qquad (2)$$

$$u(t) = KP \times e(t) + KI \times \int e(t)dt + KD \times de(t)/dt \qquad\qquad (3)$$

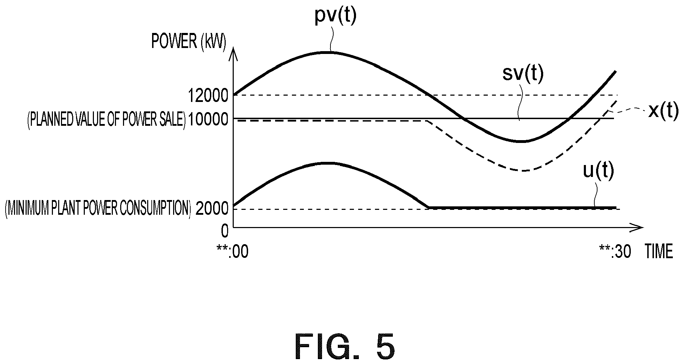

FIG. 5 is a diagram illustrating a control example when the real-time target value sv (t) is set to the average planned value of power sale, 10000 kW (see FIG. 4), as a comparative example. The vertical axis shows power, and the horizontal axis shows the time in one frame.

As illustrated in FIG. 5, the command value calculator 304 follows the equations (2) and (3), generates the input power command value u(t), so that the instantaneous power sale x (t) matches the real-time target value sv (t). When a surplus amount of generated power pv (t) is generated, the input power command value u (t) increases because an error e (t) between the actual power sale x (t) and the real-time target value sv (t) becomes large. In short, when the surplus amount of generated power pv (t) is generated, extra hydrogen may be produced by PID control, and makes efficient operation possible. The command value calculator 304 according to this embodiment corresponds to the command value generator.

On the other hand, FIG. 5 illustrates an example in which the generated power pv (t) is lower than the real-time target value sv (t) in the latter half of one frame. In such case, since the plant power consumption cannot be reduced from the minimum value (see FIG. 4), the instantaneous power sale x (t) falls below the real-time target value sv (t). As a result, the integrated target value sv_I based on the planned value of power sale sv for 30 minutes and the actual value which is the integrated value for one frame of the instantaneous power sale x (t) do not match, and the demand response will fail.

In this way, when the real-time target value sv (t) of the instantaneous power sale x (t) is set to be constant for 30 minutes because the PV generated power 30 minutes ahead is unknown, hydrogen can be produced in excess and the instantaneous power sale may be matched with the target value if a surplus of PV is generated in a former half of a 30-minute frame, but the instantaneous power sale decreases and cannot match with the target value if the PV generated power decreases in the latter half of the 30-minute frame.

Therefore, the real-time target value generator 302 according to the present embodiment does not make the real-time target value sv (t) constant, but generates the real-time target value sv (t) which changes according to situation. As such, the integrated target value sv_I (see equation (1)) and the actual value, which is the integrated value for one frame of the instantaneous power sale x (t), are controlled to match.

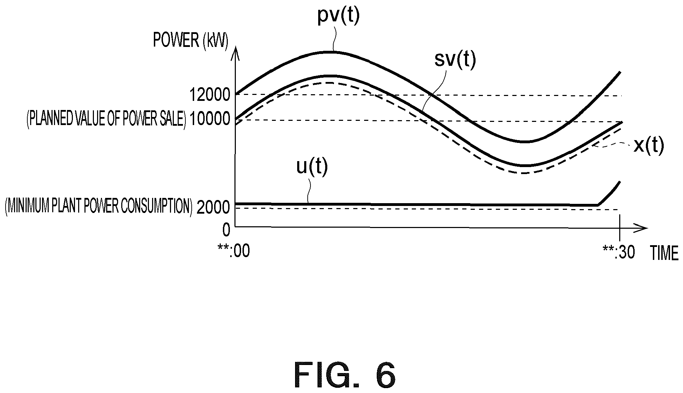

FIG. 6 is a diagram illustrating a control example in which the real-time target value sv (t) is subtracted from the generated power pv (t). The vertical axis shows power, and the horizontal axis shows time in one frame. In FIG. 6, and in the latter half, the input power command value u (t) is increased, and the integrated target value sv_I and the actual value which is the integrated value for one frame of the instantaneous power sale x (t) are matched. If the generated power pv (t) for one frame can be predicted with high accuracy, such control is possible. However, it is difficult to estimate the generated power pv (t) without error. Therefore, the real-time target value generator 302 may generate a real-time target value according to an equation (4).

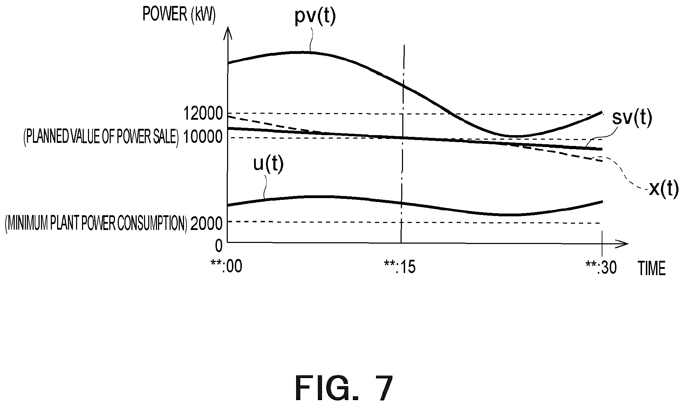

FIG. 7 is a diagram illustrating a control example in which the real-time target value sv (t) is generated according to the equation (4). The vertical axis shows power, and the horizontal axis shows time in one frame. Equation (4) shows a linear form in which the real-time target value sv (t) is linearly converted over time. T_COUNT indicates an elapsed time (in seconds) in the frame, and A indicates the slope of a straight line. When the real-time target value sv (t) represented by equation (4) is integrated over 1800 seconds, which is the time for one frame, that becomes the integrated target value sv_I. In other words, sv (t) 15 minutes later matches the average power sale (10000 kW) over 30 minutes of the planned value of power sale sv.

$$sv(t) = A \times T\_COUNT + (sv\_I - A \times 1800/2) \qquad (4)$$

For example, assuming that when the real-time target value sv (t) is a slope of A = -0.5 (kW / s); at the start of the frame (T_COUNT = 0), sv (t) = 10450 kW; 15 minutes later (T_COUNT = 900), sv (t) = 10000 kW; and at the end of the frame (T_COUNT = 1800), sv (t) = 9550 kW is obtained. In this way, it is possible to increase the integrated value of the instantaneous power sale x (t) in the former half by increasing the instantaneous power sale x (t) in the former half of the 30-minute frame. That is, an average value of the instantaneous power sale x (t) in the first period (former half) in one frame within a predetermined period is made larger than the average value in the second period (latter half) in one frame after the first period. As a result, even when the PV generated power pv (t) decreases in the latter half, the integrated value of the instantaneous power sale x (t) for one frame may be made to match the integrated target value sv_I. In other words, even when the generated power pv (t) decreases in the second period, it is possible to compensate in advance for the decrease in the instantaneous power sale x (t) in the second period by the instantaneous power sale x (t) in the first period. Therefore, it is possible to reduce the possibility that the integrated target value sv_I for 30 minutes and the actual value, which is the integrated value for one frame of the instantaneous power sale x (t), deviate from each other.

Further, the real-time target value generator 302 may change the slope of the straight line according to the prediction accuracy of the prediction value of PV generated power amount Prep according to the prediction accuracy of the predicted value. In other words, the slope A is reduced as the standard deviation $\sigma$, as the information about the prediction accuracy becomes smaller.

Further, it may be possible to acquire the prediction of the prediction value of PV generated power amount Prep from the energy management system 20 before the demand response agreement. In such case, as the prediction accuracy of the prediction value of PV generated power amount Prep decreases, as the planned value of power sale sv represented by the formula (1) may be reduced according to an agreement with an electric power company or the like, the integrated target value sv_I may be lowered. In other words, the planned value of power sales sv (see FIG. 4) is reduced. As a result, it is possible to further reduce the possibility in which the integrated target value sv_I for 30 minutes and the actual value, which is the integrated value for one frame of the instantaneous power sale x (t), deviate from each other.

Furthermore, if the prediction of the prediction value of PV generated power amount Prep can be acquired before the demand response agreement, the integrated target value sv_I may be decreased and the slope A may be increased, as the prediction accuracy decreases. As a result, it becomes possible to increase the integrated value of the instantaneous power sale x (t) in the earlier period, and it is possible to further reduce the possibility that the integrated target value sv_I for 30 minutes and the actual value, which is the integrated value for one frame of the instantaneous power sale x (t), deviate from each other.

The memory 30a may store the slope A in the equation (4) in advance for each time period. The prediction accuracy of the prediction value of PV generated power amount Prep for each time period of the day may have periodicity for each time period. Therefore, the real-time target value generator 302 may set the slope A in the equation (4), even when the prediction accuracy of the prediction value of PV generated power amount Prep is unknown.

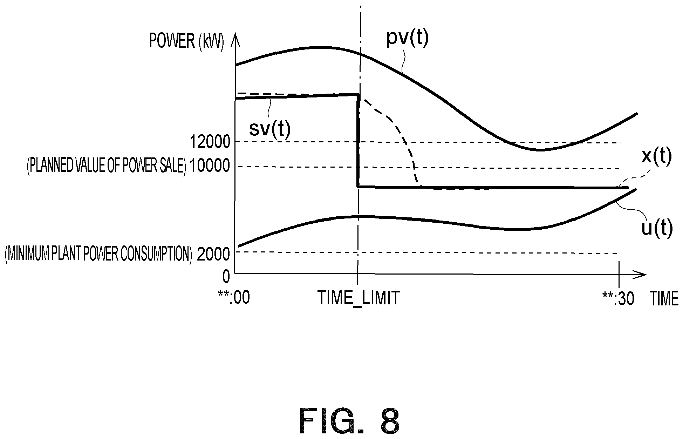

FIG. 8 is a diagram illustrating a control example in which the real-time target value sv (t) is generated according to an equation (5). The vertical axis shows power, and the horizontal axis shows time in one frame. Equation (5) shows an equation in which the real-time target value sv (t) changes stepwise over time. When the real-time target value sv (t) represented by the equation (5) is integrated over 1800 seconds, which is the time for one frame, that becomes the integrated target value sv_I. The ratio $\alpha$ is $(0 \leqq \alpha \leqq 1)$.

$$sv(t) = sv\_I / 1800 \times (1 + a), \text{ (When T\_COUNT} \leqq \text{TIME\_LIMIT)}$$

$$sv(t) = \{sv\_I - sv\_I / 1800 \times (1 + a) \times \text{TIME\_LIMIT}\} / (1800 - \text{TIME\_LIMIT})$$

$$\text{(Otherwise)}$$

$$( 5 )$$

In this way, the threshold value TIME_LIMIT of the elapsed time in one frame within a predetermined period and the ratio $\alpha$ are determined in advance, and the real-time target value generator 302 changes the time-series real-time target value sv (t) according to the ratio $\alpha$ before and after the threshold value TIME_LIMIT according to the elapsed time in one frame.

As illustrated in FIG. 8, by increasing the instantaneous power sale x (t) in the former half of 30 minutes, it is possible to increase the integrated value of the instantaneous power sale x (t) in the former half. In other words, the average value of the instantaneous power sale x (t) in the first period before the threshold value TIME_LIMIT in one frame within the predetermined period is made larger than the average value in the second period after the threshold value TIME_LIMIT. As a result, even when the generated power pv (t) decreases in the latter half, it becomes possible to match the integrated value of the instantaneous power sale x (t) for one frame with the integrated target value sv_I. Therefore, it is possible to reduce the possibility in which the integrated target value sv_I (see equation (1)) for 30 minutes and the actual value, which is the integrated value for one frame of the instantaneous power sale x (t), deviate from each other. As such, even when the real-time target value sv (t) is gradually reduced over time, it is possible to reduce the possibility that the integrated target value sv_I for 30 minutes and the actual value, which is the integrated value for one frame of the instantaneous power sale x (t), deviate from each other.

In the control example according to equation (5), the ratio $\alpha$ may be increased as the prediction accuracy of the prediction value of PV generated power amount Prep decreases. By lowering the integrated target value sv_I and increasing the ratio a, it is possible to increase the integrated value of the instantaneous power sale x (t) in the period before the threshold value TIME_LIMIT, and it is possible to further reduce the possibility that the integrated target value sv_I for 30 minutes and the actual value, which is the integrated value for one frame of the instantaneous power sale x (t), deviate from each other.

The memory 30a stores each coefficient of the equations (1) to (5) as parameters. Then, the real-time target value generator 302 generates the real-time target value sv (t) according to each parameter stored in the memory 30a.

Further, in the present embodiment, the instantaneous power sale x(t) is controlled by the input power command value u (t) to the hydrogen production device 10c, but the present invention is not limited to this. As described above, the output command value to the power conditioner 10b which can suppress the output of the generated power pv (t) may be controlled. Alternatively, when there is a control command value capable of adjusting the instantaneous power sale x (t), the control command value may be output by a similar control. Furthermore, in the present embodiment, the input power command value u (t) is used for controlling the hydrogen production apparatus 10c, but the present invention is not limited to this. The power according to the input power command value u (t) may be supplied to a storage battery or the like.

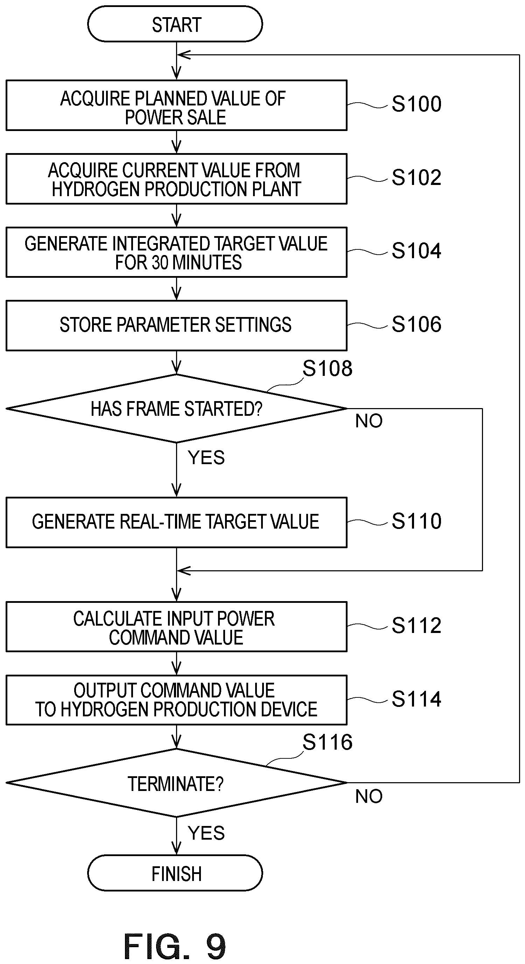

FIG. 9 is a flowchart illustrating a control example of the power control device 30. Here, the control example corresponding to the demand response for one frame will be described.

First, the interface 30b acquires the planned value of power sale sv (step S100). Subsequently, the interface 30b supplies the planned value of power sale sv to the integrated target value generator 300.

Next, the interface 30b acquires the generated power pv (t) from the hydrogen production plant 10 (step S102). Subsequently, the integrated target value generator 300 generates the integrated target value sv_I based on the planned value of power sale sv (step S104).

Next, the real-time target value generator 302 generates each parameter for generating the real-time target value sv (t) and stores it in the memory 30a (step S106).

Next, the real-time target value generator 302 determines whether the demand response frame has started, according to the input information from the energy management system 20 (step S108). When it is determined that the demand response frame has started (YES in step S108), the real-time target value generator 302 generates the real-time target value sv (t) (step S110). On the other hand, when it is determined that the demand response frame has not started (NO in step S108), the real-time target value generator 302 does not generate the real-time target value sv (t).

Next, when the real-time target value sv (t) exists, the command value calculator 304 calculates the input power command value u (t) by PID control using the real-time target value sv (t) (step S112). On the other hand, when the real-time target value sv (t) is not generated, the input power command value u (t) according to the normal operation plan value is generated (step S114).

The command value outputter 306 outputs the input power command value u (t) to the hydrogen production device 10c (step S116). Next, the controller 30c determines whether or not to terminate the entire process (step S116). If it is determined to not end the entire process (NO in step S116), the process from step S100 is repeated. On the other hand, when it is determined to terminate the whole process (YES in step S116), the whole process is finished.

As described above, according to the present embodiment, the controller 30c controls such that the average value of the instantaneous power sale x (t) in the first period in one frame within the predetermined period is larger than the average value in the second period in one frame after the first period. As a result, even when the generated power pv (t) decreases in the second period, the decrease in the instantaneous power sale x (t) in the second period can be compensated in advance by the instantaneous power sale power x (t) in the first period. Therefore, it is possible to reduce the possibility that the integrated target value sv_I (see equation (1)) for 30 minutes and the actual value, which is the integrated value for one frame of the instantaneous power sale x (t), deviate from each other.

(Second Embodiment)

The power control device 30 according to a second embodiment is different from the power control device 30 according to the first embodiment, in which the generated power may be predicted in a short term. Hereinafter, the differences from the power control device 30 according to the first embodiment will be described.

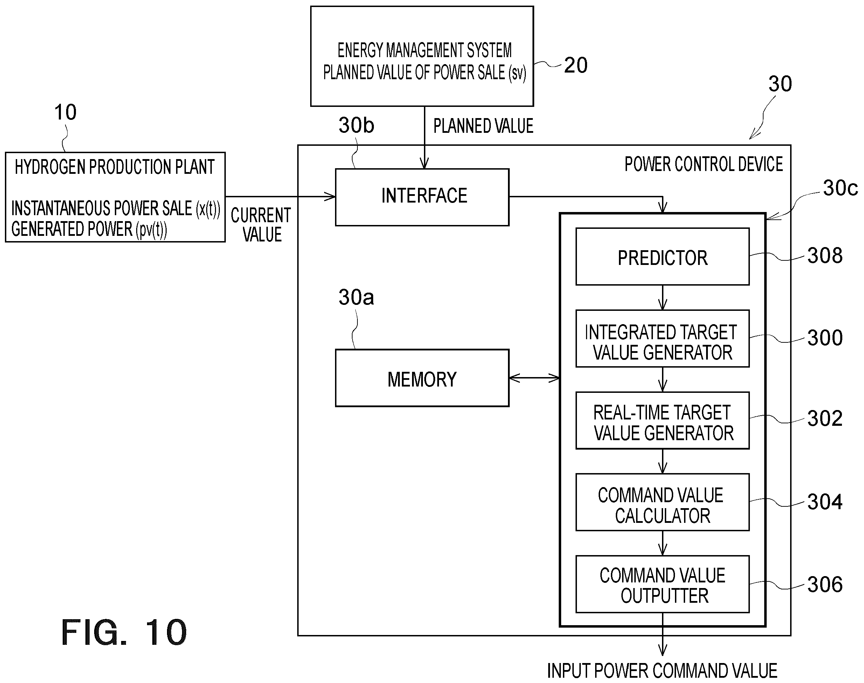

FIG. 10 is a block diagram illustrating a configuration example of the power control device 30 according to the second embodiment. As shown in FIG. 10, the power control device 30 according to the second embodiment differs from the power control device 30 according to the first embodiment in that it further includes a predictor 308.

The predictor 308 makes a short-term prediction of the renewable energy generation device 10a. The predictor 308 may generate the predicted generated power value y (t) of the renewable energy generation device 10a for one frame of the demand response period.

More specifically, the predictor 308 may generate the predicted generated power value y (t) by using an ARMA model (autoregressive moving average model) which is a type of time series analysis method. The ARMA model is a combination of an AR model (autoregressive model) and an MA model (moving average model), and may be expressed by equation (6).

$$y(t) = c + \varphi 1 \times y(t-1) + \cdots + \varphi p \times y(t-p) + \varepsilon(t) + \theta 1 \times \varepsilon(t-1) + \cdots + \theta q \times \varepsilon(t-q) \qquad (6)$$

Here, y (t) is the predicted generated power of the renewable energy generation device 10a at time t; c, $\varphi1\sim\varphi p$, and $\theta1\sim\theta q$ are parameters; and $\varepsilon(t)$ is a white noise at time t. p represents the order of the AR model, and q represents the order of the MA model. The predictor 308 determines various parameters and two orders of equation (6) using the past data of the PV generated power stored in the database in advance before the actual estimation, and stores them in the memory 30a.

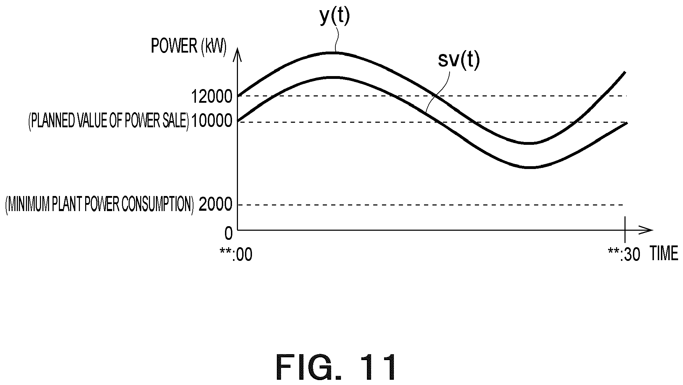

FIG. 11 is a diagram illustrating the relationship between the predicted generated power value y (t) and the real-time target value sv (t). The vertical axis shows power, and the horizontal axis shows time in one frame.

As shown in FIG. 11, the real-time target value generator 302 may generate the real-time target value sv (t) according to an equation (7). ypre_mean is the average value of the predicted generated power value y (t) for one frame after subtracting the offset value corresponding to the plant minimum power consumption.

$$sv(t) = y(t) \times (sv\_I / 1800) / ypre\_mean \qquad (7)$$

By multiplying the ratio of the average value ypre_mean of the predicted generated power value y (t) up to 30 minutes ahead and the integrated target value sv_I with respect to the predicted generated power value y (t) at time t, the integrated real-time target value which is generated matches the integrated target value.

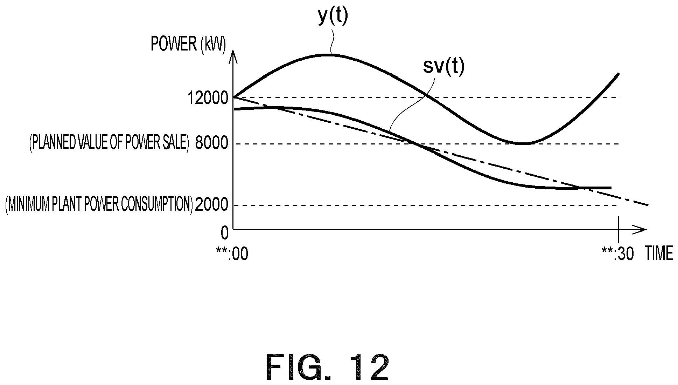

FIG. 12 is a diagram illustrating an example in which the value of the real-time target value sv (t) is changed based on the predicted generated power value y (t). The vertical axis shows power, and the horizontal axis shows time in one frame. As shown in FIG. 12, the real-time target value generator 302, based on the predicted generated power value y (t), may generate such that the real-time target value sv (t) in the former half takes a value larger than the real-time target value sv (t) in the latter half along the straight line 1200, as in the first embodiment. In this case also, the integrated value of the real-time target value sv (t) is adjusted to match the integrated target value sv_I.

In this way, the same effect as that of the first embodiment may be obtained. Further, by performing a time series prediction of the predicted generated power value y (t) using past data, it is possible to generate a real-time target value sv (t) according to the fluctuation of the generated power pv (t), and it is possible to further improve a control performance of matching an actual amount of power sale for 30 minutes with the target value of the demand response.

Note that, in this embodiment, the ARMA model of the time series analysis method is used, but the present invention is not limited to this. The AR model, the MA model, an ARIMA model, a SARIMA model, or the like may be used as the prediction model. Alternatively, a prediction method for deep learning such as a neural network or LSTM may be used as the prediction model. In neural networks and deep learning, various types of data may be used as input data. For example, it is possible to further improve the prediction accuracy by inputting various data related to PV generated power such as an amount of solar radiation, temperature, wind speed, and time. Further, as shown in FIG. 10, in the interface 30b, the prediction value of PV generated power amount Pp in units of 30 minutes is acquired from the energy management system 20 and may be used as input data for the neural network or deep learning to perform short-term prediction of PV generated power for less than 30 minutes. By using the prediction value of PV generated power amount Prep for 30 minutes, which is the current frame, and the prediction value of PV generated power amount Prep for the frame 30 minutes later, it is possible to consider the tendency of increase / decrease in PV generated power, which enables a more accurate short-term prediction of PV generated power. Further, the straight line 1200 may be generated by using the prediction value of PV generated power amount Prep for 30 minutes and the prediction value of PV generated power amount Prep for the frame after 30 minutes. This makes it possible to generate a more accurate real-time target value sv (t).

Further, as described above, the energy management system 20 may add data such as a deviation value and a degree of confidence as an index of prediction accuracy to the prediction value of PV generated power amount Prep. This information may be available from the energy management system 20. In such case, as the prediction accuracy of the prediction value of PV generated power amount Prep decreases, for example, by an agreement with the electric power company or the like, the planned amount of power sale sv represented by the equation (1) may be reduced, and the integrated target value sv_I may be lowered. As a result, the deviation between the integrated target value sv_I and the actual value may be suppressed.

Further, as described above, as the prediction accuracy of the prediction value of PV generated power amount Prep decreases and the integrated target value sv_I is lowered, the real-time target value sv (t) in the former half may be generated so as to take a larger value than the real-time target value sv (t) in the second half. As a result, the deviation between the integrated target value sv_I and the actual value may be further suppressed.

Further, in the present embodiment, the predictor 308 predicts the generated power value y (t) of the renewable energy generation device 10a, but the present invention is not limited to this. The prediction target may be data related to the generated power of the renewable energy generation device 10a such as the amount of solar radiation. When predicting the amount of solar radiation, the generated power of the renewable energy generation device 10a may be calculated from the predicted amount of solar radiation by calculation using a physical formula. Alternatively, the relationship between the amount of solar radiation and the generated power of the renewable energy generation device 10a may be stored by a statistical method, and the generated power of the renewable energy generation device 10a may be calculated from the predicted amount of solar radiation.

In the present embodiment, a short-term prediction of the generated power value y (t) up to 30 minutes ahead was performed to generate the real-time target value sv (t) at the start of the frame, but the real-time target value sv (t) may be generated each time by re-predicting every minute. However, even when the generated power value y (t) is re-predicted every minute, it is necessary to match the integrated value of the real-time target value sv (t) with the integrated target value.

For example, when the real-time target value sv (t) is generated 5 minutes after the start of the frame, it is necessary to generate the real-time target value sv (t) from 5 to 30 minutes, considering the real-time target value for 5 minutes from the start of the frame. Therefore, the real-time target value generator 302 may generate the real-time target value sv (t) according to an equation (8) to an equation (10).

More specifically, because 5 minutes have passed from the start of the frame, the average value (tmp_kW_mean) of the generated real-time target values from the current time t to the end of the frame is calculated using the real-time target value sv (t) during that period. Next, the average value (tpp_ypre_mean) of the predicted generated power value y (t) from the current time t to the end of the frame is calculated. Then, by multiplying the predicted generated power value y (t) by the ratio of the average value of the real-time target value sv (t) from the present time to the end of the frame and the average value of the predicted generated power value y (t), the integrated value of the generated real-time target value sv (t) matches the integrated target value sv_I. In the following formula, k represents the time at the start of the frame.

$$\text{tmp\_kW\_mean} = \{sv\_I - sum(sv(k), sv(k+1), \cdot\cdot, SV(t-1))\} / (1800 - T\_COUNT)$$

$$\tag{8}$$

$$\text{tmp\_ypre\_mean} = mean(y(t), y(t+1), \cdot\cdot, y(k+1800))$$

$$\tag{9}$$

$$sv(t) = y(t) \times \text{tmp\_kW\_mean} / \text{tmp\_ypre\_mean}$$

$$\tag{10}$$

By re-predicting the generated power pv (t) not only at the start of the frame but also during the frame, it is possible to respond even when the generated power pv (t) suddenly fluctuates and the prediction error becomes large. In the above, the real-time target value is generated by re-predicting the generated power pv (t) when an update cycle such as every minute is reached, but the memory may store the threshold value related to the error of predicted generated power value y (t), and generate the real-time target value sv (t) by re-predicting the generated power pv (t) when the error of the predicted generated power value y (t) exceeds the threshold value.

Note that, in the present embodiment, the prediction value of PV generated power amount in units of 30 minutes is acquired from the energy management system 20 in the interface 30b, but the present invention is not limited to this. The amount of PV generated power in 30-minute units may be predicted in the power control device 30 of the hydrogen production plant 10. Alternatively, the PV generated power amount in units of 30 minutes may be acquired from another device via the Internet.

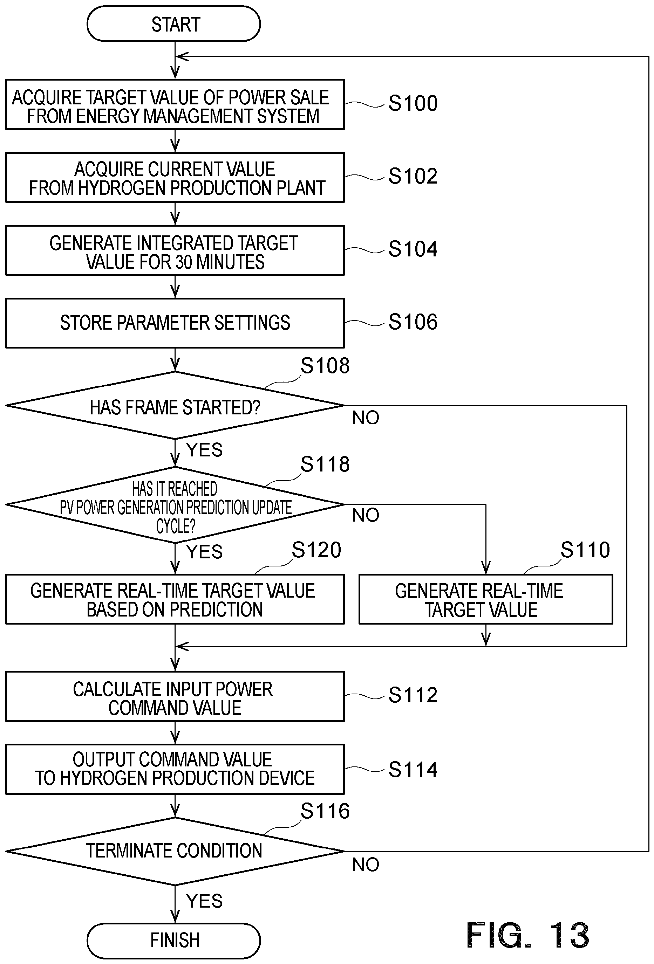

FIG. 13 is a flowchart illustrating a control example of the power control device 30 according to the second embodiment. As shown, FIG. 13 differs from the flowchart shown in FIG. 9 in that the determination step S118 is added after the determination step S108.

When the real-time target value generation unit 302 determines that the demand response frame has started (YES in step S108), the real-time target value generation unit 302 determines whether it has reached the PV generated power prediction update cycle (step S118). When determining that the predicted update cycle is reached (YES in step S118), the real-time target value generation unit 302 generates the real-time target value sv (t) based on the predicted generated power value y (t) (step S118). As such, in the prediction update cycle, the real-time target value generator 302 generates the real-time target value sv (t) based on the predicted generated power value y (t).

As described above, according to the present embodiment, the generated power y (t) of the renewable energy generation device 10a is predicted in the predictor 308. This makes it possible to generate the real-time target value sv (t) according to fluctuations in the generated power pv (t), and further improve the control performance which matches the actual amount of power sale for 30 minutes with the target value of the demand response.

While certain embodiments have been described above, these embodiments have been presented by way of example only, and are not intended to limit the scope of the inventions. Indeed, the novel devices, methods, and programs described herein may be embodied in a variety of other forms. Furthermore, various omissions, substitutions and changes in the forms of devices, methods, and programs described herein may be made without departing from the spirit of the invention.

**Claims**

1. A power control device that controls a supply of generated power generated by a renewable energy generation device, comprising:

   an acquirer configured to acquire information about an amount of power sale within a predetermined period; and
   a controller configured to control a power supplier of the renewable energy generation device to sell power from the generated power such that an integrated value of the power sale in time series within the predetermined period becomes the amount of power sale, wherein the controller makes an average value of the power sale in a first period within the predetermined period larger than the average value of a second period within the predetermined period after the first period.

2. The device of Claim 1, wherein the controller comprises a target value generator configured to generate in advance a time series target value within the predetermined period of the time series power sale within the predetermined period, and controls the power sale according to the time series target value.

3. The device of Claim 2, wherein the target value generator generates the target value such that a change of the time series target value with respect to time follows a straight line having a predetermined slope.

4. The device of Claim 3, wherein the target value in the target value generator corresponding to the straight line decreases over time.

5. The device of Claims 3 or 4, wherein the amount of power sale is set based on a predicted value of the amount of power generated by the renewable energy generation device within the predetermined period.

6. The device of Claim 5, wherein the target value generator changes the slope of the straight line according to a prediction accuracy of the predicted value.

7. The device of claims 3-6, further comprising a memory configured to store the slope for each time period, wherein the target value generator generates a series target value in which the integrated value of the time series target value within the predetermined period matches the amount of power sale by using the slope of the current time period stored in the memory.

8. The device of Claim 2, wherein the target value generator generates the target value such that the change of the time series target value over time decreases gradually.

9. The device of Claim 8, wherein a threshold value and a ratio of an elapsed time within the predetermined period are determined in advance, and wherein the target value generator changes the time series target value before and after the threshold value according to the ratio according to the elapsed time within the predetermined period.

10. The device of Claim 9, wherein the target value generator generates the target value such that the integrated value of the time series target value within the predetermined period matches the amount of power sale.

11. The device of Claims 3-10, wherein the controller further comprises a predictor configured to predict the generated power in time series corresponding to the elapsed time within the predetermined period, and wherein the target value generator generates the time series target value based on the time series prediction of the generated power.

12. The device of Claim 11, wherein the predictor predicts the generated power in time series using at least one of an

EP 4 027 474 A1

information about solar radiation, temperature, wind speed, and time.

13. The device of Claims 11 or 12, wherein the predictor predicts the generated power in time series using the predicted value of the amount of generated power within the predetermined period.

14. The device of Claims 11-13, wherein the target value generator, when the error in the time series prediction of the generated power exceeds a predetermined threshold value, updates the target value such that the time series target value matches the amount of power sale by using the time series generated power newly predicted by the predictor.

15. A power control method that controls a hydrogen production plant that produces hydrogen by a generated power generated by a renewable energy generation device, comprising:

acquiring information about an amount of power sale within a predetermined period; and
controlling the power supplier of the renewable energy generation device to sell power from the generated power such that an integrated value of a power sale in time series within the predetermined period becomes the amount of power sale, wherein an average value of the power sale in a first period within the predetermined period is made larger than the average value of a second period within the predetermined period after the first period.

1

20

ENERGY
MANAGEMENT
SYSTEM

Eps: POWER SYSTEM

MEASUREMENT SIGNAL (x(t))

COMMAND
SIGNAL (sv)

COMMAND
SIGNAL (pv(t))

HYDROGEN
PRODUCTION PLANT

POWER CONTROL
DEVICE

COMMAND
SIGNAL (u(t))

10

30

# FIG. 1

FIG. 2

FIG. 3

| | POWER AMOUNT kWh | AVERAGE PREDICTION VALUE OF PV POWER GENERATION AMOUNT FOR 30 MINUTES |
|---|---|---|
| PREDICTION VALUE OF PV GENERATED POWER Prep | 6000kWh | 12000kWh |
| PLANT POWER CONSUMPTION (=MINIMUM) | 1000kWh | 2000kWh |
| PLANNED VALUE OF POWER SALE sv | 5000kWh | 10000kWh |

# FIG. 4

POWER (kW)

pv(t)

sv(t)

x(t)

u(t)

12000

(PLANNED VALUE OF POWER SALE) 10000

(MINIMUM PLANT POWER CONSUMPTION) 2000

0

**:00

**:30   TIME

# FIG. 5

FIG. 6

FIG. 7

FIG. 8

START

ACQUIRE PLANNED VALUE OF POWER SALE — S100

ACQUIRE CURRENT VALUE FROM HYDROGEN PRODUCTION PLANT — S102

GENERATE INTEGRATED TARGET VALUE FOR 30 MINUTES — S104

STORE PARAMETER SETTINGS — S106

S108

HAS FRAME STARTED?   NO

YES

GENERATE REAL-TIME TARGET VALUE — S110

CALCULATE INPUT POWER COMMAND VALUE — S112

OUTPUT COMMAND VALUE TO HYDROGEN PRODUCTION DEVICE — S114

S116

TERMINATE?   NO

YES

FINISH

# FIG. 9

FIG. 10

ENERGY MANAGEMENT SYSTEM
PLANNED VALUE OF POWER SALE (sv) — 20

10

HYDROGEN PRODUCTION PLANT

INSTANTANEOUS POWER SALE (x(t))
GENERATED POWER (pv(t))

CURRENT
VALUE

PLANNED VALUE

30b

30

POWER CONTROL DEVICE

INTERFACE

30c

30a

MEMORY

PREDICTOR — 308

INTEGRATED TARGET
VALUE GENERATOR — 300

REAL-TIME TARGET
VALUE GENERATOR — 302

COMMAND VALUE
CALCULATOR — 304

COMMAND VALUE
OUTPUTTER — 306

INPUT POWER COMMAND VALUE

POWER (kW)

y(t)

sv(t)

12000

(PLANNED VALUE OF POWER SALE) 10000

(MINIMUM PLANT POWER CONSUMPTION) 2000

0

**:00

**:30 TIME

FIG. 11

POWER (kW)

y(t)

sv(t)

12000

(PLANNED VALUE OF POWER SALE) 8000

(MINIMUM PLANT POWER CONSUMPTION) 2000

0

**:00

**:30  TIME

# FIG. 12

START

ACQUIRE TARGET VALUE OF POWER SALE
FROM ENERGY MANAGEMENT SYSTEM — S100

ACQUIRE CURRENT VALUE
FROM HYDROGEN PRODUCTION PLANT — S102

GENERATE INTEGRATED TARGET
VALUE FOR 30 MINUTES — S104

STORE PARAMETER SETTINGS — S106

S108
HAS FRAME STARTED? — NO

YES

S118
HAS IT REACHED
PV POWER GENERATION PREDICTION UPDATE
CYCLE? — NO

YES — S120
GENERATE REAL-TIME TARGET VALUE
BASED ON PREDICTION

S110
GENERATE REAL-TIME
TARGET VALUE

CALCULATE INPUT POWER
COMMAND VALUE — S112

OUTPUT COMMAND VALUE
TO HYDROGEN PRODUCTION DEVICE — S114

S116
TERMINATE CONDITION — NO

YES

FINISH

FIG. 13

Europäisches
Patentamt

European
Patent Office

Office européen
des brevets

## EUROPEAN SEARCH REPORT

Application Number

EP 22 15 0935

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/121441 A1 (TOSHIBA ENERGY SYSTEMS & SOLUTIONS CORP [JP]) 18 June 2020 (2020-06-18) * the whole document * | 1-15 | INV. H02J3/00 H02J15/00 |
| A,P | & EP 3 896 816 A1 (TOSHIBA ENERGY SYSTEMS & SOLUTIONS CORP [JP]) 20 October 2021 (2021-10-20) * the whole document * | 1-15 | |
| A | EP 2 565 296 A1 (INGETEAM POWER TECHNOLOGY SA [ES]; ACCIONA EN SA [ES]) 6 March 2013 (2013-03-06) * the whole document * | 1-15 | |
| A | FR 2 051 987 A5 (BABCOCK ATLANTIQUE SA) 9 April 1971 (1971-04-09) * the whole document * | 1-15 | |
| A | US 2009/048716 A1 (MARHOEFER JOHN JOSEPH [US]) 19 February 2009 (2009-02-19) * the whole document * | 1-15 | TECHNICAL FIELDS SEARCHED (IPC) H02J G01N |

The present search report has been drawn up for all claims

| Place of search | Date of completion of the search | Examiner |
|---|---|---|
| Munich | 23 May 2022 | Hunckler, José |

**EP 4 027 474 A1**

## ANNEX TO THE EUROPEAN SEARCH REPORT
## ON EUROPEAN PATENT APPLICATION NO.

EP 22 15 0935

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2022

| Patent document cited in search report | | Publication date | Patent family member(s) | | Publication date |
|---|---|---|---|---|---|
| WO 2020121441 | A1 | 18-06-2020 | EP | 3896816 A1 | 20-10-2021 |
| | | | JP | WO2020121441 A1 | 07-10-2021 |
| | | | US | 2021305605 A1 | 30-09-2021 |
| | | | WO | 2020121441 A1 | 18-06-2020 |
| EP 2565296 | A1 | 06-03-2013 | AU | 2010352432 A1 | 15-11-2012 |
| | | | BR | 112012027402 A2 | 21-11-2017 |
| | | | CA | 2797893 A1 | 03-11-2011 |
| | | | CN | 102959131 A | 06-03-2013 |
| | | | DK | 2565296 T3 | 23-06-2014 |
| | | | EP | 2565296 A1 | 06-03-2013 |
| | | | ES | 2474440 T3 | 09-07-2014 |
| | | | US | 2013093194 A1 | 18-04-2013 |
| | | | WO | 2011135110 A1 | 03-11-2011 |
| | | | ZA | 201207595 B | 26-06-2013 |
| FR 2051987 | A5 | 09-04-1971 | FR | 2051987 A5 | 09-04-1971 |
| | | | JP | S5130792 B1 | 02-09-1976 |
| US 2009048716 | A1 | 19-02-2009 | US | 2009048716 A1 | 19-02-2009 |
| | | | WO | 2010048092 A1 | 29-04-2010 |

EPO FORM P0459

For more details about this annex : see Official Journal of the European Patent Office, No. 12/82